(19) Europäisches Patentamt
European Patent Office
Office européen des brevets

(11) **EP 4 059 969 A1**

(12) **EUROPEAN PATENT APPLICATION**
published in accordance with Art. 153(4) EPC

(43) Date of publication:
**21.09.2022 Bulletin 2022/38**

(21) Application number: **20888664.8**

(22) Date of filing: **09.11.2020**

(51) International Patent Classification (IPC):
*C08F 210/14* (2006.01)    *C08L 23/20* (2006.01)
*C08K 3/26* (2006.01)

(52) Cooperative Patent Classification (CPC):
**C08F 210/14; C08K 3/26; C08L 23/20**

(86) International application number:
**PCT/JP2020/041711**

(87) International publication number:
**WO 2021/095683 (20.05.2021 Gazette 2021/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.11.2019 JP 2019207178**

(71) Applicant: **Mitsui Chemicals, Inc.**
**Tokyo 105-7122 (JP)**

(72) Inventors:
• **UEKUSA, Takayuki**
  **Sodegaura-shi, Chiba 299-0265 (JP)**
• **YASUI, Motoyasu**
  **Sodegaura-shi, Chiba 299-0265 (JP)**
• **FUKAGAWA, Yoshisada**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **RESIN COMPOSITION AND MOLDED ARTICLE**

(57)    An object of the present invention is to provide a resin composition and a molded article each having suppressed surface stickiness while having high stress-relaxing ability and vibration-absorbing ability at room temperature. A resin composition (X) containing 10 to 50 parts by mass of a thermoplastic resin (A) and 50 to 90 parts by mass of an inorganic substance (B), wherein a tan $\delta$ peak temperature and tan $\delta$ peak value, obtained by performing dynamic viscoelastic measurement at a frequency of 10 rad/s (1.6 Hz) in the temperature range of -40 to 150°C, are 0°C or higher and 60°C or lower, and 0.8 or more and 5.0 or less, respectively.

EP 4 059 969 A1

## Description

Technical Field

The present invention relates to a resin composition and a molded article comprising the resin composition, and in more detail, relates to a resin composition comprising a thermoplastic resin and an inorganic substance, a molded article, and applications of the same.

Background Art

For the purpose of preventing vibration and noise due to the vibration of structural members including vehicles, automobile components, home electric appliances, various machines, building materials, and acoustic equipment, materials having vibration-damping and vibration-proofing ability have been applied to or pasted on the surfaces or insides of the structural members. Particularly in acoustic vibration plates, a material having vibration-damping and vibration-proofing ability is usually used in order to enhance the elastic modulus and the internal loss. As the material having vibration-damping and vibration-proofing ability, for example, a material obtained by adding a powder such as a metal oxide, graphite, mica, carbon black, calcium carbonate, talc, or clay, or natural or synthetic fiber to, for example, any of rubber, asphalt, various synthetic resin emulsions and latexes, or a synthetic resin, has been used.

The vibration-damping ability required in these vibration-damping materials can be evaluated by, for example, a loss tangent, tan $\delta$, that is a ratio of loss modulus (G") to storage modulus (G'), (G"/G'). That is, a material having higher tan $\delta$ in a temperature environment where the vibration-damping material is used exhibits viscosity more intensely and therefore is likely to absorb stress due to vibration and exhibits higher vibration-damping ability. Since tan $\delta$ changes depending on the temperature, techniques of adjusting the maximum value of tan $\delta$ (hereinafter, also referred to as "tan $\delta$ peak value.") and the temperature where the value of tan $\delta$ reaches the maximum (hereinafter, also simply referred to as "tan $\delta$ peak temperature.") of a vibration-damping material in specific ranges have been developed.

Patent Document 1 and Patent Document 2 disclose a material obtained using a 4-methyl-1-pentene copolymer, the material having a high tan $\delta$ peak at room temperature, and also disclose applying this material to a vibration-damping and vibration-proofing member.

Meanwhile, attempts have also been made to adopt a material obtained by blending a thermoplastic resin and a powder. By adopting such a material, for example, strength, massive feeling, thermal conductivity, and electric conductivity, which have never been able to be achieved by a conventional thermoplastic resin alone, are obtained. In addition, development to, for example, synthetic paper and labels has also been progressing by making a material obtained by blending a thermoplastic resin and a powder into a sheet. Further, a material obtained by blending a thermoplastic resin and a powder has been attracting attention from the viewpoint of a low environmental load material by using a material of natural origin as a constitutional material. For example, Patent Document 3 discloses imparting high thermal conductivity and massive feeling, which have never been able to be achieved by a conventional polyolefin, to a resultant molded article by adopting a composition of a polyolefin and a metal oxide, and also discloses applying such a composition to eating utensils or a tumbler. Further, Patent Documents 4 and 5 disclose synthetic paper made of a composition comprising an inorganic substance and a polyolefin resin.

Citation List

Patent Documents

Patent Document 1: JP 2012-082388 A
Patent Document 2: JP 2017-132920 A
Patent Document 3: WO 2017/209215
Patent Document 4: JP 2001-071378 A
Patent Document 5: WO 2018/092494

Summary of Invention

Technical Problem

The above-mentioned materials described in Patent Documents 1 and 2 have a high tan $\delta$ peak value at room temperature but may cause problems such as occurrence of stickiness on the surface of a molded article and deterioration in injection moldability due to the viscosity. Therefore, to avoid such problems, each of the materials described in Patent Documents 1 and 2 needs to be made into a composition with a crystalline polyolefin or a thermoplastic elastomer, so that there has been a problem in that the high tan δ peak cannot be retained. The resin composition of Patent Document 3 has also had problems in that the high tan δ peak cannot be retained, and flexibility cannot be imparted to a molded article. Further, in the inventions described in Patent Documents 4 and 5, the results are such that flexibility can be imparted to a molded article to some extent due to reduction in thickness by sheet molding and stickiness between sheets are suppressed, but the tan δ peak value is lowered, and therefore, for example, the vibration-damping ability and the stress-relaxing ability cannot be able to be retained in some cases.

Accordingly, an object of the present invention is to solve the problems of the conventional techniques and to provide a resin composition and a molded article each having suppressed surface stickiness while having high stress-relaxing ability and vibration-absorbing ability at room temperature.

Solution to Problem

As a result of diligent studies conducted to attain the object, the present inventors have completed the present invention by finding out that the object can be attained by using a specific resin composition comprising a thermoplastic resin and an inorganic substance in specific proportions.

That is, the gist of the present invention is as follows.

[1] A resin composition (X) comprising:

10 to 50 parts by mass of a 4-methyl-1-pentene·α-olefin copolymer (A-1); and
50 to 90 parts by mass of an inorganic substance (B) (assuming that the total amount of the 4-methyl-1-pentene·α-olefin copolymer (A-1) and the inorganic substance (B) is 100 parts by mass), and satisfying the following requirements (a) and (b):

a requirement (a); having a tan δ peak temperature of 0°C or higher and 60°C or lower, the tan δ peak temperature being obtained by performing dynamic viscoelastic measurement at a frequency of 10 rad/s (1.6 Hz) in the temperature range of -40 to 150°C, and
a requirement (b); having a tan δ peak value of 0.8 or more and 5.0 or less, the tan δ peak value being obtained by performing dynamic viscoelastic measurement at a frequency of 10 rad/s (1.6 Hz) in the temperature range of -40 to 150°C.

[2] A resin composition (X) comprising:

10 to 50 parts by mass of a thermoplastic resin (A); and
50 to 90 parts by mass of an inorganic substance (B) (assuming that the total amount of the thermoplastic resin (A) and the inorganic substance (B) is 100 parts by mass), and satisfying the following requirements (a) and (b):

a requirement (a); having a tan δ peak temperature of 0°C or higher and 60°C or lower, the tan δ peak temperature being obtained by performing dynamic viscoelastic measurement at a frequency of 10 rad/s (1.6 Hz) in the temperature range of -40 to 150°C; and
a requirement (b); having a tan δ peak value of 0.8 or more and 5.0 or less, the tan δ peak value being obtained by performing dynamic viscoelastic measurement at a frequency of 10 rad/s (1.6 Hz) in the temperature range of -40 to 150°C.

[3] The resin composition (X) according to [1], wherein the 4-methyl-1-pentene·α-olefin copolymer (A-1) satisfies the following requirements (c) to (f):

a requirement (c); the copolymer (A-1) comprises 55 to 90% by mol of a constitutional unit (i) derived from 4-methyl-1-pentene and 10 to 45% by mol of a constitutional unit (ii) derived from the α-olefin (excluding 4-methyl-1-pentene) assuming that the total amount of the constitutional unit (i) and the constitutional unit (ii) is 100% by mol;
a requirement (d); the copolymer (A-1) has a melting point (Tm) as measured by a differential scanning calorimeter (DSC) of 160°C or lower, or has no observed melting point (Tm) ;
a requirement (e); the copolymer (A-1) has a tan δ peak temperature of 15°C or higher and 45°C or lower, the tan δ peak temperature being obtained by performing dynamic viscoelastic measurement at a frequency of 10 rad/s (1.6 Hz) in the temperature range of -40 to 150°C; and

a requirement (f); the copolymer (A-1) has a tan $\delta$ peak value of 0.6 or more and 5.0 or less, the tan $\delta$ peak value being obtained by performing dynamic viscoelastic measurement at a frequency of 10 rad/s (1.6 Hz) in the temperature range of -40 to 150°C.

[4] The resin composition (X) according to any one of [1] to [3], wherein the inorganic substance (B) is one or more selected from the group consisting of magnesium sulfate, barium sulfate, calcium carbonate, magnesium oxide, and talc.

[5] The resin composition (X) according to any one of [1] to [4], wherein the inorganic substance (B) has an average particle diameter of 0.01 $\mu$m to 100 $\mu$m.

[6] A molded article comprising the resin composition according to any one of [1] to [5].

[7] A sheet comprising the resin composition according to any one of [1] to [5].

[8] A toy comprising the resin composition according to any one of [1] to [5].

[9] A daily good comprising the resin composition according to any one of [1] to [5].

[10] An electronic equipment housing comprising the resin composition according to any one of [1] to [5].

Advantageous Effects of Invention

The present invention provides a resin composition and a molded article each having suppressed surface stickiness while having high stress-relaxing ability and vibration-absorbing ability at room temperature.

Description of Embodiments

Hereinafter, a resin composition and a molded article of the present invention will be described.

[Resin Composition (X)]

The resin composition (X) of the present invention comprises a thermoplastic resin (A) and an inorganic substance (B).

The resin composition (X) of the present invention may be composed of the thermoplastic resin (A) and the inorganic substance (B), or, as will be mentioned later, may further comprise, in addition to the thermoplastic resin (A) and the inorganic substance (B), an additional component which is neither the thermoplastic resin (A) nor the inorganic substance (B).

In addition, the resin composition (X) of the present invention satisfies both of the following requirements (a) and (b).

Requirement (a);

The resin composition (X) of the present invention has a temperature at which a loss tangent, tan $\delta$, obtained by performing dynamic viscoelastic measurement at a frequency of 10 rad/s (1.6 Hz) in the temperature range of -40 to 150°C takes a peak value, of 0°C or higher and 60°C or lower, preferably 10°C or higher and 50°C or lower, more preferably 20°C or higher and 45°C or lower, particularly preferably 25°C or higher and 43°C or lower.

Requirement (b);

The resin composition (X) of the present invention has a peak value of the tan $\delta$ described above, of 0.8 or more and 5.0 or less. This peak value of the tan $\delta$ is preferably 0.6 or more and 4.5 or less, more preferably 0.8 or more and 3.5 or less.

Tan $\delta$ can be calculated using storage modulus (G') and loss modulus (G"), which are obtained when the dynamic viscoelasticity is measured, as a ratio of the loss modulus (G") to the storage modulus (G'), (G"/G': loss tangent).

In the present invention, a temperature at which tan $\delta$ takes a peak value (maximum value) in the range of -40 to 150°C is defined as the above-described temperature at which tan $\delta$ takes a peak value, and the value of the tan $\delta$ on that occasion is defined as the above-described peak value of the tan $\delta$. The peak is considered to arise from the glass transition temperature of the thermoplastic resin composition.

Hereinafter, the thermoplastic resin (A) and the inorganic substance (B), which form the resin composition (X) of the present invention, will be described.

<Thermoplastic Resin (A)>

The resin composition (X) of the present invention comprises the thermoplastic resin (A).

The thermoplastic resin (A) that is used in the present invention is not particularly limited as long as the object of the present invention can be attained, particularly as long as the resin composition (X) having the peak temperature and peak value of the tan δ can be provided. However, in a typical aspect of the present invention, the thermoplastic resin (A) is a 4-methyl-1-pentene·α-olefin copolymer (A-1) or a styrene elastomer (A-2). Among these, the 4-methyl-1-pentene·α-olefin copolymer (A-1) is preferable.

Hereinafter, the 4-methyl-1-pentene·α-olefin copolymer (A-1) and the styrene elastomer (A-2) will be described.

«4-methyl-1-pentene·α-olefin copolymer (A-1)»

The 4-methyl-1-pentene·α-olefin copolymer (A-1) (hereinafter, also simply referred to as "copolymer (A-1).") preferably satisfies all the following requirements (c) to (f). The 4-methyl-1-pentene·α-olefin copolymer (A-1) can be used alone, or two or more 4-methyl-1-pentene·α-olefin copolymers (A-1) can be used in combination.

Requirement (c);

The 4-methyl-1-pentene·α-olefin copolymer (A-1) comprises a constitutional unit (i) derived from 4-methyl-1-pentene and a constitutional unit (ii) derived from the α-olefin excluding 4-methyl-1-pentene, and preferably comprises 55% by mol or more and 90% by mol or less of the constitutional unit (i) and 10% by mol or more and 45% by mol of the constitutional unit (ii) assuming that the total amount of the constitutional unit (i) and the constitutional unit (ii) is 100% by mol.

In the present specification, a "structural unit derived from α-olefin" means a structural unit corresponding to the α-olefin, that is, a structural unit represented by $-CH_2-CHR-$ (wherein R represents a hydrogen atom or an alkyl group). The "constitutional unit derived from 4-methyl-1-pentene" is interpreted similarly and means a structural unit corresponding to 4-methyl-1-pentene (that is, a structural unit represented by $-CH_2-CH(-CH_2CH(CH_3)_2)-$).

The lower limit value of the proportion of the constitutional unit (i) that forms the 4-methyl-1-pentene·α-olefin copolymer (A-1) is preferably 55% by mol, more preferably 60% by mol, further preferably 68% by mol. On the other hand, the upper limit value of the proportion of the constitutional unit (i) is preferably 90% by mol, more preferably 86% by mol, further preferably 84% by mol. When the proportion of the constitutional unit (i) that forms the 4-methyl-1-pentene·α-olefin copolymer (A-1) has a lower limit value of the above-described lower limit value or more, the temperature at which tan δ of the 4-methyl-1-pentene·α-olefin copolymer (A-1) takes a peak value is around room temperature, and therefore the temperature at which tan δ of the resin composition takes a peak value is adjusted easily in the range mentioned above.

Understandably, the upper limit value of the proportion of the constitutional unit (ii) is preferably 45% by mol, more preferably 40% by mol, further preferably 32% by mol. On the other hand, the lower limit value of the proportion of the constitutional unit (ii) is preferably 10% by mol, more preferably 14% by mol, further preferably 16% by mol.

In a typical aspect of the present invention, the α-olefin that derives the constitutional unit (ii) is one or more selected from α-olefins having 2 to 20 carbon atoms and excluding 4-methyl-1-pentene. Examples of such an α-olefin include linear α-olefins having 2 to 20 carbon atoms (preferably 2 to 15 carbon atoms, more preferably 2 to 10 carbon atoms), such as ethylene, propylene, 1-butene, 1-pentene, 1-hexene, 1-octene, 1-decene, 1-undecene, 1-dodecene, 1-tetradecene, 1-hexadecene, 1-octadecene, and 1-eicosene, and branched α-olefins having 5 to 20 carbon atoms (preferably 5 to 15 carbon atoms), such as 3-methyl-1-butene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene. Among these, ethylene, propylene, 1-butene, 1-pentene, 1-hexene, and 1-octene are preferable, and ethylene and propylene are particularly preferable. The constitutional unit (ii) may be derived from one compound of these or may be derived from two or more compounds of these.

However, besides the constitutional unit (i) and the constitutional unit (ii), the 4-methyl-1-pentene·α-olefin copolymer (A-1) may further comprise, as a constitutional unit (iii), a constitutional unit derived from an additional monomer which is other than any of 4-methyl-1-pentene and the α-olefins that derive the constitutional unit (ii) as long as the amount of the constitutional unit (iii) is small to such an extent that the object of the present invention is not impaired (for example, 10 parts by mol or less assuming that the total amount of the constitutional unit (i) and the constitutional unit (ii) is 100 parts by mol). Specific preferred examples of such an additional monomer include 5-vinyl-2-norbornene and 5-ethylidene-2-norbornene when the copolymer (A-1) is a 4-methyl-1-pentene·propylene copolymer.

Requirement (d);

Preferably, the 4-methyl-1-pentene·α-olefin copolymer (A-1) has a melting point (Tm) as measured by a differential scanning calorimeter (DSC) of 160°C or lower, or has no observed melting point (Tm), more preferably, the copolymer (A-1) has a melting point (Tm) of 140°C or lower, or has no observed melting point (Tm), and further preferably, the copolymer (A-1) has no observed melting point (Tm). When such a requirement is satisfied, the kneadability with the inorganic substance in the resin composition of the present invention is thereby improved, so that the vibration-absorbing ability and the stress-relaxing ability can be improved.

Requirement (e);

The 4-methyl-1-pentene·α-olefin copolymer (A-1) preferably has a tan δ peak temperature of 15°C or higher and 45°C or lower, the tan δ peak temperature being obtained by performing dynamic viscoelastic measurement at a frequency of 10 rad/s (1.6 Hz) in the temperature range of -40 to 150°C. With respect to the lower limit value of the tan δ peak temperature, the tan δ peak temperature is more preferably 20°C or higher, further preferably 25°C or higher. In addition, the tan δ peak temperature is 40°C or lower in an exemplary aspect of the present invention, but the tan δ peak temperature may be higher than 40°C as long as the object of the present invention can be achieved. In a typical aspect of the present invention, the tan δ peak temperature is more preferably 20°C or higher and 45°C or lower, further preferably 25°C or higher and 45°C or lower. By setting the tan δ peak temperature to the temperature range described above, the value of tan δ at room temperature can be increased more.

Requirement (f);

The 4-methyl-1-pentene·α-olefin copolymer (A-1) preferably has a tan δ peak value of 0.6 or more and 5.0 or less, more preferably 1.0 or more and 5.0 or less, further preferably 1.5 or more and 5.0 or less, particularly preferably 2.0 or more and 4.0 or less, the tan δ peak value being obtained by performing dynamic viscoelastic measurement at a frequency of 10 rad/s (1.6 Hz) in the temperature range of -40 to 150°C. By setting the tan δ peak value to the range described above, the vibration-absorbing ability and the hardness and followability of the material can be changed according to the speed of tension or deformation.

In addition to the requirements (c) to (f), the 4-methyl-1-pentene·α-olefin copolymer (A-1) preferably satisfies one or more requirements selected from the following requirements (g), (h), (i), and (j).

Requirement (g);

The 4-methyl-1-pentene·α-olefin copolymer (A-1) preferably has an intrinsic viscosity [η] measured in decalin at 135°C of 0.1 dL/g or more and 5.0 dL/g or less, more preferably 0.5 dL/g or more and 4.0 dL/g or less, further preferably 0.5 dL/g or more and 3.5 dL/g or less. The 4-methyl-1-pentene·α-olefin copolymer (A-1) having the intrinsic viscosity [η] in the range described above is easily molded into a sheet-shaped thermoplastic resin composition.

The intrinsic viscosity [η] of the 4-methyl-1-pentene·α-olefin copolymer (A-1) can be adjusted into the range described above through controlling the molecular weight or the polymerization activity by adding hydrogen during production by polymerization.

The intrinsic viscosity [η] can be determined in such a way that when different amounts of thermoplastic resin compositions are dissolved in decalin at 135°C, the viscosity increasing rate $\eta_{sp}$ per unit concentration c (that is, $\eta_{sp}/c$) is determined for each polymer as the reduced viscosity $\eta_{red}$, and $\eta_{red}$ is extrapolated to zero in terms of the unit concentration c of the polymer.

Requirement (h);

The 4-methyl-1-pentene·α-olefin copolymer (A-1) preferably has a proportion of weight-average molecular weight (Mw) to number-average molecular weight (Mn) (molecular weight distribution: Mw/Mn) as measured by gel permeation chromatography (GPC) of 1.0 or more and 3.5 or less, more preferably 1.2 or more and 3.0 or less, further preferably 1.5 or more and 2.8 or less. The 4-methyl-1-pentene·α-olefin copolymer (A-1) having the Mw/Mn in the range described above is easily molded into a sheet-shaped thermoplastic resin composition because deterioration in moldability due to a polymer having a low molecular weight and low stereoregularity is unlikely to occur.

In addition, the 4-methyl-1-pentene·α-olefin copolymer (A-1) preferably has a weight-average molecular weight (Mw) as measured by gel permeation chromatography (GPC) of 500 or higher and 10,000,000 or lower, more preferably 1,000 or higher and 5,000,000 or lower, further preferably 1,000 or higher and 2,500,000 or lower, in terms of polystyrene.

Mw/Mn and Mw of the 4-methyl-1-pentene·α-olefin copolymer (A-1) can be adjusted into the range described above by using, for example, a metallocene catalyst.

Mw and Mw/Mn described above can be determined by, for example, performing measurement using, as a liquid chromatograph, ALC/GPC 150-C plus (differential refractive index detector-integrated type) manufactured by Waters Corporation, connecting columns GMH6-HT $\times$ 2 and GMH6-HTL $\times$ 2, manufactured by Tosoh Corporation, in series, at a flow rate of 1.0 ml/min at 140°C and using o-dichlorobenzene as a mobile phase medium, thereby obtaining a chromatograph, and analyzing the chromatogram using a calibration curve for which standard polystyrene samples are used.

Requirement (i);

The 4-methyl-1-pentene·$\alpha$-olefin copolymer (A-1) preferably has a density (measured according to JIS K7112) of 870 to 830 kg/m$^3$, more preferably 865 to 830 kg/m$^3$, further preferably 855 to 830 kg/m$^3$. Note that the details such as the measurement condition are as described in the section of Examples mentioned later.

The density can appropriately be changed by the comonomer composition ratio in the copolymer (A-1), and the copolymer (A-1) having a density within the range described above is advantageous in producing a lightweight sheet.

Requirement (j);

The 4-methyl-1-pentene·$\alpha$-olefin copolymer (A-1) preferably has a melt flow rate (MFR; Melt Flow Rate)) (measured at 230°C with a load of 2.16 kg according to ASTM D1238) of 4.0 to 30 g/10 min, more preferably 7.0 to 15 g/10 min, further preferably 7.0 to 13 g/10 min. The copolymer (A-1) having a melt flow rate within the range described above is advantageous in producing a pellet and a sheet which are satisfactory in molding, and a molded article.

A particularly preferred embodiment of the 4-methyl-1-pentene·$\alpha$-olefin copolymer (A-1) further satisfies the requirement (g) in addition to the requirements (c) to (f), and a most especially preferred embodiment further satisfies one or more, preferably two or more selected from the requirements (h), (i), and (j), particularly preferably all of the requirements (h), (i), and (j), in addition to the requirements (c) to (g).

«Method for Producing 4-methyl-1-pentene·$\alpha$-olefin copolymer (A-1)»

Methods for producing the copolymer (A-1) are not particularly limited and the copolymer (A-1) can be obtained by, for example, polymerizing 4-methyl-1-pentene and the "$\alpha$-olefin that derives the constitutional unit (ii)" mentioned above in the presence of a proper polymerization catalyst such as a magnesium-supported titanium catalyst or a metallocene catalyst.

As a polymerization catalyst which can be used in the present invention, a conventional catalyst known in the art, such as, for example, a magnesium-supported titanium catalyst, or a metallocene catalyst described in, for example, WO 01/53369, WO 01/27124, and JP H03-193796 A, or JP H02-41303 A, WO 2011/055803, and WO 2014/050817 is suitably used.

The polymerization can be performed appropriately selecting from, for example, liquid phase polymerization methods such as solution polymerization and suspension polymerization, and gas phase polymerization methods.

In the liquid phase polymerization methods, an inert hydrocarbon solvent can be used as a solvent that forms the liquid phase. Examples of the inert hydrocarbon include aliphatic hydrocarbons such as propane, butane, pentane, hexane, heptane, octane, decane, dodecane, and kerosene, alicyclic hydrocarbons such as cyclopentane, cyclohexane, methylcyclopentane, and methylcyclohexane, aromatic hydrocarbons such as benzene, toluene, and xylene, halogenated hydrocarbons such as ethylene chloride, chlorobenzene, dichloromethane, trichloromethane, and tetrachloromethane, and mixtures thereof.

In addition, as the liquid phase polymerization method, bulk polymerization can also be adopted in which monomers themselves that derive the constitutional unit (i) to the constitutional unit (iii) are used as solvents.

By performing copolymerization of the monomers that derive the constitutional unit (i) to the constitutional unit (iii) in a stepwise manner, the composition distribution of the constitutional unit (i) to the constitutional unit (iii) that form the 4-methyl-1-pentene·$\alpha$-olefin copolymer (A-1) can properly be controlled.

The polymerization temperature is preferably -50°C or higher and 200°C or lower, more preferably 0°C or higher and 100°C or lower, further preferably 20°C or higher and 100°C or lower.

The polymerization pressure is preferably normal pressure or higher to 10 MPa gauge pressure, more preferably normal pressure or higher to 5 MPa gauge pressure.

In order to control the molecular weight of the polymer to be produced or the polymerization activity, hydrogen may be added when polymerization is performed. As the amount of hydrogen to be added, approximately 0.001 NL or more and 100 NL or less per 1 kg of the total amount of the monomers that derive the constitutional unit (i) to the constitutional unit (iii) is proper.

«Styrene Elastomer (A-2)»

Examples of the styrene elastomer (A-2) include a block copolymer of a polystyrene block which is a hard segment (or crystalline segment) and a diene monomer block which is a soft segment (or amorphous segment), and the hard segment may be present at both ends of the soft segment. Examples of the styrene elastomer (A-2) include styrene·butadiene-styrene copolymers (SBS), hydrogenated styrene·butadiene·styrene block copolymers (HSBR), styrene·ethylene·propylene·styrene block copolymers (SEPS), styrene·ethylene·butene·styrene block copolymers (SEBS), styrene·isoprene·styrene block copolymers (SIS), styrene·isobutylene·styrene copolymers (SIBS), styrene·isobutylene copolymers (SIB), and styrene·ethylene·butene·styrene·styrene copolymers (SEBSS). The styrene elastomer is used alone, or two or more styrene elastomers are used in combination.

Specific examples of the hydrogenated styrene·butadiene·styrene block copolymer include a product commercially available as trade name: DYNARON (R) from JSR Corporation.

A styrene·ethylene·propylene·styrene block copolymer is obtained by hydrogenating a styrene·isoprene·styrene block copolymer (SIS). Specific examples of SIS include a product commercially available as trade name: JSR SIS (R) from JSR Corporation, a product commercially available as trade name: HYBRAR (R) from Kuraray Co., Ltd., or a product commercially available as trade name: KRATON D (R) from Shell Japan Ltd.

Specific examples of SEPS include a product commercially available as trade name: SEPTON (R) from Kuraray Co., Ltd., or a product commercially available as trade name: KRATON (R) from Shell Japan Ltd.

Specific examples of SEBS include a product commercially available as trade name: Tuftec (R) from Asahi Kasei Corp., or a product commercially available as trade name: KRATON (R) from Kraton Polymers LLC. Specific examples of the styrene·ethylene·butene·styrene·styrene copolymer, which has a structure including styrene also in the soft segment, include a product commercially available as S.O.E (R) from Asahi Kasei Corp.

Specific examples of SIB and SIBS include a product commercially available as trade name: SIBSTAR (R) from KANEKA

CORPORATION.

<Inorganic Substance (B)>

The resin composition (X) of the present invention also comprises the inorganic substance (B) in addition to the thermoplastic resin (A). By the resin composition (X) of the present invention also comprising the inorganic substance (B), both of the high tan δ peak and little stickiness between sheets when the resin composition (X) of the present invention is made into sheets can be achieved.

The inorganic substance (B) is not particularly limited as long as the inorganic substance (B) is an inorganic compound, and conventional inorganic compounds known in the art can be utilized. Examples of the inorganic substance (B) include carbon black, graphite, or carbon black surface-treated with, for example, a silane coupling agent, oxide fillers such as fine-powdered silicic acid, silica (such as fumed silica, precipitated silica, diatomaceous earth, and quartz), alumina, iron oxide, ferrite, magnesium oxide, titanium oxide, antimony trioxide, zirconium oxide, barium oxide, and calcium oxide, hydroxide fillers such as aluminum hydroxide and magnesium hydroxide, silicate fillers such as aluminum silicate (clay), magnesium silicate (talc), mica, kaolin, calcium silicate, glass fibers, glass flakes, and glass beads, sedimentary rock filles such as diatomaceous earth and limestone, clay mineral fillers such as montmorillonite, magnesian montmorillonite, ferri-montmorillonite, ferro-magnesian montmorillonite, beidellite, aluminian beidellite, nontronite, aluminian nontronite, saponite, aluminian saponite, hectorite, sauconite, stevensite, and bentonite, magnetic fillers such as ferrite, iron, and cobalt, electrically conductive fillers such as silver, gold, copper, and alloys thereof, thermally conductive fillers such as aluminum nitride, boron nitride, silicon carbide, sulfate fillers such as aluminum sulfate, magnesium sulfate, barium sulfate, and calcium sulfate, sulfite filles such as calcium sulfite, carbonate fillers such as calcium carbonate, basic magnesium carbonate, and dolomite, and titanate fillers such as barium titanate and calcium titanate.

As the inorganic substance (B), silica, magnesium sulfate, barium sulfate, calcium carbonate, magnesium hydroxide, magnesium oxide, and talc are preferable, magnesium sulfate, barium sulfate, calcium carbonate, magnesium oxide, and talc are more preferably used, and from the viewpoint of balance among, for example, price, performance, handleability, and supply stability, barium sulfate, calcium carbonate, and talc are most preferable.

These inorganic substances (B) may be used alone, or two or more of these inorganic substances (B) may be used in combination.

From the viewpoint of processability with the thermoplastic resin (A), the particle diameter of the inorganic substance (B) is preferably 0.01 μm to 100 μm, more preferably 0.01 μm to 80 μm, further preferably 0.01 μm to 50 μm. The particle diameter (average particle diameter) of the inorganic substance is a 50% particle diameter (d50) which is obtained from a distribution curve measured with a laser diffraction particle size distribution analyzer and expressed by integrated %.

<Proportion of Thermoplastic Resin (A) to Inorganic Substance (B)>

The mass ratio of the thermoplastic resin (A) to the inorganic substance (B) in the resin compositions (X) of the present invention (mass of thermoplastic resin (A)/mass of inorganic substance (B), hereinafter, also simply referred to as "(A)/(B).") is 10/90 to 50/50. In other words, in the resin composition (X) of the present invention, assuming that the total amount of the thermoplastic resin (A) and the inorganic substance (B) is 100 parts by mass, the content of the thermoplastic resin (A) is 10 to 50 parts by mass, and the content of the inorganic substance (B) is 50 to 90 parts by mass. From the viewpoint of exhibiting the effects of the present invention more suitably,

the content of the thermoplastic resin (A) is,
on the lower limit side, preferably 15 parts by mass or more, more preferably 20 parts by mass or more, still more preferably 25 parts by mass or more, particularly preferably 28 parts by mass or more, and is,
on the upper limit side, preferably 49 parts by mass or less, more preferably 48 parts by mass or less, still more preferably 45 parts by mass or less, particularly preferably 44 parts by mass or less. Particularly when the content of the thermoplastic resin (A) in the resin composition (X) is equal to or smaller than a certain amount, there is a tendency that the contraction during molding the resin composition (X) is small and the elastic modulus is high. When the content of the thermoplastic resin (A) is within a certain range, particularly equal to or larger than a certain amount, there is a tendency that the stickiness between sheets can be suppressed when the resin composition (X) is made into sheets.

On the other hand, the content of the inorganic substance (B) is,

on the upper limit side, preferably 51 parts by mass or more, more preferably 52 parts by mass or more, still more preferably 55 parts by mass or more, particularly preferably 56 parts by mass or more, and is,
on the lower limit side, preferably 85 parts by mass or less, more preferably 80 parts by mass or less, still more preferably 75 parts by mass or less, particularly preferably 72 parts by mass or less.

When the mass ratio described above is converted to the amount of the inorganic substance (B) per 100 parts by mass of the thermoplastic resin (A), the amount of the inorganic substance (B) included in the resin composition (X) of the present invention is 100 to 900 parts by mass, preferably 100 to 567 parts by mass, more preferably 100 to 400 parts by mass, further preferably 122 to 300 parts by mass, per 100 parts by mass of the thermoplastic resin (A).

When two or more thermoplastic resins (A) are used, the total amount of the thermoplastic resins (A) is 100 parts by mass. When two or more inorganic substances (B) are used, the "amount of the inorganic substance (B)" is defined by the total amount of the inorganic substances (B).

<Additional Component>

The resin composition (X) of the present invention comprises the thermoplastic resin (A) and the inorganic substance (B).

In one aspect of the present invention, the resin composition (X) is composed of the thermoplastic resin (A) and the inorganic substance (B). However, in addition to the thermoplastic resin (A) and the inorganic substance (B), the resin composition (X) of the present invention may further comprise an additional component which is neither the thermoplastic resin (A) nor the inorganic substance (B) (hereinafter, referred to as "additional component"). Examples of the "additional component" which can be contained in the resin composition (X) of the present invention include additional polymers and additives mentioned later.

The content of the "additional component" which can be contained in the resin composition (X) of the present invention is preferably 25% by mass or less, for example, less than 25% by mass, based on the whole amount of the resin composition (X) of the present invention. When two or more "additional components" are used, the total content of the "additional components" is preferably 25% by mass or less, for example, less than 25% by mass, based on the whole amount of the resin composition (X) of the present invention.

When the resin composition (X) of the present invention comprises the "additional component," the total amount of the thermoplastic resin (A) and the inorganic substance (B) is preferably 75% by mass or more and less than 100% by mass based on the whole amount of the resin composition (X).

«Additional Polymer»

The resin composition (X) of the present invention may further comprise an additional polymer which is not the 4-methyl-1-pentene·α-olefin copolymer (A-1) or the styrene elastomer (A-2) (hereinafter, referred to as "additional polymer"), as long as the effects of the present invention is not impaired.

Examples of the "additional polymer" include conventional resins known in the art and typified by low-density, medium-density, or high-density polyethylene, highpressure low-density polyethylene, isotactic polypropylene, syndiotactic polypropylene, poly-1-butene, poly-4-methyl-1-pentene, poly-3-methyl-1-butene, cyclic olefin copolymers, chlorinated polyolefins, thermoplastic polyurethanes, polyolefin elastomers, polystyrene elastomers, polyester elastomers, and polyamide elastomers. The resins may be used alone, or two or more of these resins may be used in combination.

The amount of these resins to be added is preferably 0 to 100 parts by mass, more preferably 0.1 to 80 parts by mass, particularly preferably 0.3 to 50 parts by mass, per 100 parts by mass of the thermoplastic resin (A). When the resin composition (X) is produced, these resins may be used in the form of a composition comprising an additive mentioned later, but the amount of the resins to be added in that case is based on the mass obtained by subtracting the mass of the additive from the mass of this composition.

In addition, the "additional polymer" is not limited to an unmodified polymer but may be a modified polymer. From this, the resin composition (X) of the present invention may further comprise a modified polyolefin wax (C) in order to make it easy to knead the inorganic substance (B) whose content by percentage is high with the thermoplastic resin (A). Present inventers presume that the aggregation of the inorganic substance (B) in the thermoplastic resin (A) is suppressed by using this modified polyolefin wax (C), and thereby making it easy to perform kneading. In addition, present inventers consider that, by using the modified polyolefin wax (C), it is made easy to knead the inorganic substance (B) whose content by percentage is high with the thermoplastic resin (A).

The type of the modified polyolefin wax (C) is not particularly limited but is preferably a modified polyethylene wax or a modified polypropylene wax, more preferably a modified polyethylene wax.

The modified polyolefin wax (C) can be produced by a method known in the art. Examples of the method include a method of adding an unsaturated carboxylic acid or a derivative thereof to a low-molecular-weight ethylene polymer without a solvent or in a solvent by radical reaction, a method of adding an unsaturated carboxylic acid or a derivative thereof to a low-molecular-weight ethylene polymer in the presence of a Lewis acid, and a method of adding an unsaturated carboxylic acid or a derivative thereof to a low-molecular-weight ethylene polymer at a high temperature. The reaction temperature is 20°C to 300°C, particularly preferably 120°C to 250°C. The melting point of a low-molecular-weight ethylene polymer is approximately 120°C, and therefore the reaction temperature is preferably set to 120°C or higher in the sense that the reaction system is made uniform.

The unsaturated carboxylic acid is not particularly limited as long as the unsaturated carboxylic acid is a compound having a reactive double bond and having a carboxylic acid group, and examples of the compound which can be used include unsaturated carboxylic acids known in the art. The derivative of the unsaturated carboxylic acid is not particularly limited as long as the derivative of the unsaturated carboxylic acid is a compound having a reactive double bond and having a group which can be derived from a carboxylic acid group, and examples thereof include anhydrides, esters, acid halides, amides, and imides of unsaturated carboxylic acids.

Examples of the unsaturated carboxylic acid include unsaturated monocarboxylic acids such as acrylic acid, methacrylic acid, crotonic acid, and isocrotonic acid, and unsaturated dicarboxylic acids such as maleic acid, fumaric acid, tetrahydrophthalic acid, itaconic acid, citraconic acid, norbornene dicarboxylic acid, and nadic acid endo-cis-bicyclo[2.2.1]hept-5-ene-2,3-dicarboxylic acid). By using the unsaturated carboxylic acid, a modified hydrocarbon resin having a carboxylic acid group is obtained.

As the anhydride of the unsaturated carboxylic acid, anhydrides of the unsaturated dicarboxylic acids described above can be used. Specific examples thereof include maleic anhydride, itaconic anhydride, citraconic anhydride, tetrahydrophthalic anhydride, and nadic anhydride endo-cis-bicyclo[2.2.1]hept-5-ene-2,3-dicarboxylic anhydride). By using the anhydride of the unsaturated carboxylic acid, a modified hydrocarbon resin having a carboxylic anhydride group is obtained. Maleic anhydride is particularly preferable.

As the ester of the unsaturated carboxylic acid, alkyl esters, hydroxyalkyl esters, and glycidyl esters of the unsaturated carboxylic acids described above can be used. Specific examples thereof include monomethyl maleate, dimethyl maleate, glycidyl maleate, hydroxy (meth)acrylate, hydroxypropyl (meth)acrylate, and glycidyl (meth)acrylate. By using the ester of the unsaturated carboxylic acid, a modified hydrocarbon resin having a carboxylic acid ester group is obtained.

Specific examples of the halide of the unsaturated carboxylic acid include malenyl chloride, dichloromaleic anhydride ($C_4Cl_2O_3$). By using the halide of the unsaturated carboxylic acid, a modified hydrocarbon resin having a halogen atom-containing carboxylic acid group is obtained.

Specific examples of the amide of the unsaturated carboxylic acid include sulfamide, phthalamide, and maleamide. By using the amide of the unsaturated carboxylic acid, a modified hydrocarbon resin having an amide group is obtained.

Specific examples of the imide of the unsaturated carboxylic acid include maleimide, phthalimide, and sulfimide. By using the imide of the unsaturated carboxylic acid, a modified hydrocarbon resin having an imide group is obtained.

The modified polyolefin wax (C) preferably has an acid value of 1 to 100 mg-KOH/g, more preferably 10 to 90 mg-KOH/g. The modified polyolefin wax (C) preferably has a number-average molecular weight (Mn) in terms of polystyrene as measured by gel permeation chromatography (GPC) of 400 to 20000.

The amount of the modified polyolefin wax (C) to be added is preferably 0 to 20 parts by mass, more preferably 0.1 to 15 parts by mass, particularly preferably 0.3 to 10 parts by mass, per 100 parts by mass of the thermoplastic resin (A).

«Additive»

If necessary, the resin composition (X) may further comprise an additive known in the art.

Examples of the additive include, but not limited to, weatherability stabilizers, heat stabilizers, ultraviolet absorbers, infrared absorbers, antistatic agents, anti-slip agents, antiblocking agents, anti-fogging agents, lubricants, pigments, dyes, plasticizers, antiaging agents, hydrochloric acid absorbers, antioxidants, crystal nucleating agents, antimold agents, antimicrobial agents, flame retardants, organic fillers, and softening agents. These additives may be used alone, or plural types of these additives may be used together.

Examples of the softening agent include softening agents known in the art, such as: petroleum substances such as a process oil, a lubricating oil, paraffin, liquid paraffin, a polyethylene wax, a polypropylene wax, petroleum asphalt, and Vaseline; coal tars such as coal tar and coal tar pitch; fatty oils such as castor oil, linseed oil, rapeseed oil, soybean oil, and coconut oil; waxes such as tall oil, bees wax, carnauba wax, and lanolin; fatty acids such as ricinoleic acid, palmitic acid, stearic acid, 12-hydroxystearic acid, montanoic acid, oleic acid, and erucic acid, or metal salts thereof; synthetic polymers such as a petroleum resin, a coumarone-indene resin, and atactic polypropylene; ester plasticizers such as dioctyl phthalate, dioctyl adipate, and dioctyl sebacate; and a microcrystalline wax, liquid polybutadiene, or modified products or hydrogenated products thereof, and liquid thiokol.

Examples of the softening agent include aromatic carboxylic acid esters (such as dibutyl phthalate), aliphatic carboxylic acid esters (such as methyl acetyl ricinoleate), aliphatic dicarboxylic acid esters (such as an adipic acid-propylene glycol polyester), aliphatic tricarboxylic acid esters (such as triethyl citrate), phosphoric acid triesters (such as triphenyl phosphate), epoxy aliphatic acid esters (such as epoxy butyl stearate), and petroleum resins.

Examples of the mold release agents include lower (C1 to C4) alcohol esters of higher fatty acids (butyl stearate, etc.), polyhydric alcohol esters of fatty acids (C4 to C30) (hydrogenated castor oil, etc.), glycol esters of fatty acids, and liquid paraffin.

Examples of the antioxidant include phenol antioxidants (such as 2,6-di-t-butyl-4-methylphenol), polycyclic phenol antioxidants (such as 2,2'-methylenebis(4-methyl-6-t-butylphenol)), phosphorus antioxidants (such as tetrakis(2,4-di-t-butylphenyl)-4,4-biphenylene diphosphonate), and amine antioxidants (such as N,N-diisopropyl-p-phenylenediamine). n-Octadecyl 3-(4'-hydroxy-3',5'-di-t-butylphenyl)propionate which is used in Examples mentioned later corresponds to a phenol antioxidant.

Examples of the flame retardant include phosphoric acid esters and other phosphorus compounds, such as ammonium polyphosphate, ethylenebistris(2-cyanoethyl)phosphonium chloride, tris(tribromophenyl)phosphate, tris(tribromophenyl)phosphate, and tris(3-hydroxypropyl)phosphine oxide, chlorine flame retardants such as chlorinated paraffin, chlorinated polyolefins, and perchlorocyclopentadecane, bromine flame retardants such as hexabromobenzene, ethylenebisdibromonorbornanedicarboximide, ethylenebistetrabromophthalimide, tetrabromobisphenol A derivatives, tetrabromobisphenol S, and tetrabromodipentaerythritol, and mixtures thereof.

Examples of the ultraviolet absorber include benzotriazole ultraviolet absorbers, benzophenone ultraviolet absorbers, salicylic acid ultraviolet absorbers, and acrylate ultraviolet absorbers.

Examples of the antimicrobial agent include quaternary ammonium salts, pyridine compounds, organic acids, organic acid esters, halogenated phenol, and organic iodine.

Examples of the surfactant include nonionic, anionic, cationic, or amphoteric surfactants. Examples of the nonionic surfactant include: polyethylene glycol-type nonionic surfactants such as higher alcohol ethylene oxide adducts, fatty acid ethylene oxide adducts, higher alkylamine ethylene oxide adducts, and polypropylene glycol ethylene oxide adducts; and polyhydric alcohol-type nonionic surfactants such as polyethylene oxide, fatty acid esters of glycerin, fatty acid esters of pentaerythritol, fatty acid esters of sorbitol or sorbitan, alkyl ethers of polyhydric alcohols, and aliphatic amides of alkanolamines, examples of the anionic surfactant include: sulfuric acid ester salts such as alkali metal salts of higher fatty acids; sulfonate salts such as alkylbenzenesulfonate salts, alkylsulfonate salts, and paraffin sulfonate salts; and phosphoric acid ester salts such as higher alcohol phosphoric acid ester salts, and examples of the cationic surfactant include quaternary ammonium salts such as alkyltrimethylammonium salts. Examples of the amphoteric surfactant include: amino acid-type amphoteric surfactants such as higher alkylaminopropionates; and betaine-type amphoteric surfactants such as higher alkyl dimethyl betaine and higher alkyl dihydroxyethyl betaine.

Examples of the antistatic agent include the surfactants described above, fatty acid esters, and polymer-type antistatic agents. Examples of the fatty acid ester include esters of stearic acid and oleic acid. Examples of the polymer-type antistatic agent include polyether ester amide.

Examples of the pigment include inorganic pigments (such as titanium oxide, iron oxide, chromium oxide, and cadmium sulfide) and organic pigments (azolake pigments, thioindigo pigments, phthalocyanine pigments, and anthraquinone pigments). Examples of the dye include azo dyes, anthraquinone dyes, and triphenylmethane dyes. The amounts of the pigment and the dye to be added are not particularly limited, and the total amount thereof is usually 5 parts by mass or less, preferably 0.1 to 3 parts by mass, per 100 parts by mass of the copolymer (A).

Examples of the slipping agent include waxes (such as carnauba wax), higher fatty acids (such as stearic acid), higher fatty acid salts (such as calcium stearate), higher alcohols (such as stearyl alcohol), and higher fatty acid amides (such as stearic acid amide and erucic acid amide).

The amounts of these various additives to be added are not particularly limited and, as long as the object of the present invention is not impaired, are each preferably 0.01 to 30 parts by mass per 100 parts by mass of the thermoplastic resin (A) according to the application.

<Method for Producing Resin Composition (X)>

The method for producing the resin composition (X) of the present invention is not particularly limited, and, for example, a conventional production method known in the art can be used. A melt kneading method, in which the composition is produced by melt-kneading each component, is preferably adopted. The melt kneading method is not particularly limited, and a method in which melt kneading is performed at, for example, 180 to 250°C using a mixing machine known in the art, such as a kneader, a roll mill, a Banbury mixer, or a single- or twin-screw extruder, which is usually used, and then granulation or pulverization is performed can be adopted. Among these, a twin-screw extruder is preferably used from the viewpoint of mixing ability and productivity. A high-quality resin composition pellet in which each component and additive are dispersed and mixed uniformly can be obtained by the method. The inorganic substance (B) may be used in the form of a master batch obtained by preliminarily mixing the inorganic substance (B) with a resin component such as the thermoplastic resin (A).

[Molded Article]

The molded article of the present invention comprises the resin composition (X), and examples thereof include sheets, toys, daily goods, and electronic equipment housings.

The method for producing (method for molding) the molded article of the present invention is not particularly limited, and, for example, a conventional production method known in the art can be used. Examples of the production method that is suitably used include extrusion sheet molding, compression molding, injection molding, filament spinning, and melt extrusion and lamination with a 3D printer.

In an exemplary and suitable embodiment of the present invention, the production method is injection molding. Processing the resin composition (X) by injection molding enables suitably obtaining the molded article of the present embodiment, comprising the resin composition (X).

For example, the molded article of the present embodiment is obtained by performing molding with a general T-die extrusion molding machine. A sheet is formed by performing molding with, for example, a single-screw extruder at a cylinder temperature of 170 to 250°C and cast roll temperature of 0 to 70°C. Although the thickness of the sheet depends on the purpose of use thereof, it is preferable that the thickness of the sheet be usually 5 to 1000 μm, preferably 30 to 200 μm because the productivity of the sheet is excellent, a pin hole does not occur during molding the sheet, and sufficient strength is obtained. In addition, embossing may be performed on the sheet surface, or the sheet may be stretched during molding the sheet or after molding the sheet. Further, annealing at a temperature lower than the melting point of the resin may be performed on the sheet obtained by molding.

For example, the molded article of the present embodiment can be obtained by allowing the molten resin composition to pass through a spinneret and extruding the molten resin composition to give the molded article of the present embodiment as a monofilament, a multifilaments, flat yarn, cut fiber, or a nonwoven fabric. The melting temperature in melt spinning at the time when a monofilament, a multifilament, or flat yarn is produced can appropriately be selected according to the melting point of the copolymer (A) and is preferably in the range of 180 to 280°C, and more preferably in the range of 180 to 230°C. When the melting temperature falls within the range described above, excessive thermal decomposition of the copolymer (A) can be suppressed, and the elongational viscosity of the fibrous strand discharged from the spinneret is lowered sufficiently, and therefore fiber having excellent mechanical strength and favorable spinning processability can be obtained. Further, the fiber thus obtained may be stretched. When this stretching is performed to such an extent that, for example, molecular orientation in at least a uniaxial direction is given effectively to the copolymer (A), the modulus and the strength can be improved. The stretching ratio is usually 1.05 to 10.0 times, preferably 1.1 to 7.0 times, more preferably 1.2 to 6.0 times.

<Application>

The molded article comprising the resin composition of the present invention has a feature of slow relaxation in addition to high stress-relaxing ability and vibration-absorbing ability and therefore can be used for applications such as materials for automobiles, materials for clothing, sanitary materials, materials for construction, materials for shoes, materials for sports, materials for leisure, and industrial materials, which are conventional applications known in the art.

The molded article obtained from the resin composition of the present invention has high thermal conductivity while having shape memory ability and shape-retaining ability, and therefore can be used in various fields such as household goods. Specific examples of thereof include containers for putting in, for example, foods, and eating utensils such as forks, knives, spoons, and dishes. These are extremely useful as eating utensils or containers which are substituted for china and porcelain in that these can simply be molded by injection molding and has high thermal conductivity, and therefore the warm and cold feeling of the contents is easily felt, and the massive feeling is obtained.

In addition, development to other applications where china and porcelain are used, for example, daily goods such as lamp shades and vases, structural materials for specific acoustic speakers (such as high-grade speakers), and products to be used around water, such as washstands and toilet bowls is possible. Besides the applications where china and porcelain are used, development to, for example, model and toy applications, such as plastic models, furniture applications, such as desks and chairs, musical instrument applications, such as keyboards of pianos, and construction applications, such as tiles, substitutes for artificial marble, and building materials, is also possible making good use of the characteristics that massive feeling and stable feeling can be imparted. Further, there is a possibility that the molded article obtained from the resin composition of the present invention is also suitable as filaments of 3D printers utilizing the warm feeling and the moldability.

Besides, examples of the application also include containers, such as various bottles and jars making good use of the characteristics, such as designability, stable feeling, and the tactile impression. More specific examples thereof include containers with a lid (such as airless containers), and containers having a shape of, for example, a compact (for cosmetics), or a palette or bottle (for cosmetics).

Further, the molded article obtained from the resin composition (X) of the present invention is also useful as a heat dissipation member in applications where high thermal conductivity is required. For example, the molded article obtained from the resin composition (X) of the present invention is extremely useful as a heat dissipation member such as a heat dissipation sheet in electronic components where high thermal conductivity is required and various types of electronic equipment such as notebook personal computers and mobile equipment. Moreover, when the thermally conductive composition of the present invention is applied to a part or the whole of the housings of various types of electronic equipment such as notebook computers and mobile equipment and is used in combination with a heat dissipation sheet, further enhancement of the heat dissipation performance of the electronic equipment can be expected. Furthermore, the thermally conductive composition of the present invention is used in a part of the housings of various types of electronic equipment such as notebook personal computers and mobile equipment, and a material having a reduced metal oxide content by percentage or a material not containing a metal oxide is used in other parts, for example, a place where hands often come into contact during operation, and thereby a housing capable of reducing a possibility of onset of, for example, a low-temperature burn during operation for long hours can be produced. Such a housing can be produced by, for example, a method in which a plurality of resin injection gates are installed at a die mold for molding the housing, and a resin having a different composition is injected for each gate.

Examples

Hereinafter, the present invention will more specifically be described with reference to Examples, but the present invention is not limited to the following Examples as long as the present invention is maintained within the scope of the gist thereof.

Physical properties in Examples and Comparative Examples were measured by the following methods.

[Composition]

The content by percentage (% by mol) of each constitutional unit (4-methyl-1-pentene and $\alpha$-olefin) in the 4-methyl-1-pentene copolymer (A) was measured by $^{13}$C-NMR.

•    Measurement apparatus: nuclear magnetic resonance apparatus (ECP500, manufactured by JEOL Ltd.)
•    Observed nucleus: $^{13}$C (125 MHz)
•    Sequence: single-pulse proton broadband decoupling
•    Pulse width: 4.7 $\mu$sec (45° pulse)

- Repetition time: 5.5 sec
- Number of scans: 10,000 or more
- Solvent: o-dichlorobenzene/deuterated benzene (volume ratio: 80/20) mixed solvent
- Sample concentration: 55 mg/0.6 mL
- Measurement temperature: 120°C
- Chemical shift reference value: 27.50 ppm

[Intrinsic Viscosity [$\eta$]]

The intrinsic viscosity [$\eta$] of the copolymer was measured using an Ubbelohde viscometer as a measurement apparatus in a decalin solvent at 135°C.

Approximately 20 mg of a specific 4-methyl-1-pentene (4MPI) copolymer was dissolved in 25 ml of decalin, and the specific viscosity $\eta_{sp}$ was then measured using an Ubbelohde viscometer in an oil bath of 135°C. This decalin solution was diluted by adding 5 ml of decalin, and the specific viscosity $\eta_{sp}$ was then measured in the same manner as described above. This dilution operation was further repeated two times to determine a value of $\eta_{sp}/C$, as the intrinsic viscosity [$\eta$] (unit: dl/g), when the concentration (C) was extrapolated to 0 (see the following Formula 1).

$$[\eta] = \lim (\eta_{sp}/C) \quad (C \to 0) \quad \cdots \text{Formula 1}$$

[Weight-average Molecular Weight (Mw) and Molecular Weight Distribution (Mw/Mn)]

The weight-average molecular weight (Mw) and the molecular weight distribution (Mw/Mn) represented by a ratio of weight-average molecular weight (Mw) to number-average molecular weight (Mn) of a copolymer were calculated by a standard polystyrene conversion method using gel permeation chromatography (GPC).

- Conditions -

Measurement apparatus: GPC (ALC/GPC 150-C plus, differential refractive index detector-integrated type, manufactured by Waters Corporation)
Columns: two columns of GMH6-HT (manufactured by Tosoh Corp.) and two columns of GMH6-HTL (manufactured by Tosoh Corp.) were connected in series
Eluent: o-dichlorobenzene
Column temperature: 140°C
Flow rate: 1.0 mL/min
[Melt Flow Rate (MFR)]

The melt flow rates (MFR: Melt Flow Rate) of the copolymers (A-1-1) and (A-1-2), PP, and an olefin elastomer were measured at 230°C with a load of 2.16 kg in conformity to ASTM D1238. The unit is g/10 min.

[Density]

The density of copolymers was measured in conformity to JIS K7112 (density-gradient tube method). This density ($kg/m^3$) was used as an index of lightness.

The density ($g/m^3$) of the resin composition was also measured in conformity to JIS K7112 (density-gradient tube method).

[Melting Point (Tm)]

The melting point (Tm) of the copolymers was measured using a differential scanning calorimeter (DSC220C, manufactured by Seiko Instruments Inc.) as a measurement apparatus. An aluminum pan for measurement was filled with approximately 5 mg of a polymer, sealed, and heated from room temperature to 200°C at 10°C/min. The temperature was kept at 200°C for 5 minutes in order to allow the polymer to melt thoroughly and subsequently cooled to -50°C at 10°C/min. The temperature was kept at -50°C for 5 minutes, the second heating was then performed to 200°C at 10°C/min, and a peak temperature (°C) in this second heating is defined as the melting point (Tm) of the polymer. When plural peaks are detected, a peak detected at the highest temperature side is adopted as the melting point (Tm).

[Dynamic Viscoelasticity]

In the dynamic viscoelastic measurement, a press sheet made of a resin or a resin composition to be measured and having a thickness of 3 mm was used as a measurement sample, and further, a 45 mm × 10 mm × 3 mm rectangular piece necessary for the dynamic viscoelastic measurement was cut out. Temperature dependence of the dynamic viscoelasticity from -40 to 150°C was measured at a frequency of 10 rad/s (1.6 Hz) using MCR301 manufactured by ANTON Paar GmbH to measure a temperature at which the loss tangent (tan $\delta$) due to the glass transition temperature takes a peak value (maximum value) (hereinafter, also referred to as "peak value temperature") in the range of 0 to 40°C and a value of the loss tangent (tan $\delta$) when the loss tangent (tan $\delta$) takes the peak value.

[Tackiness]

In the measurement of tackiness, a cast sheet made of a resin or a resin composition to be measured and having a thickness of 0.5 mm was used as a measurement sample, two 100 mm × 25 mm sheets necessary for the measurement were cut out from this cast sheet, these two sheets were stacked on top of each other, and both surfaces of resultant stacked sheets were sandwiched with glass plates. A 10 kg weight was placed thereon and left to stand still at 50°C for 3 days. Thereafter, the stacked sheets were used as specimen sheets, and placed and fixed in a tensile tester in such a way that the longitudinal direction thereof would be a vertical direction. At the lower end part of these specimen sheets, an aluminum round bar (length of 150 mm, diameter of 2 mm) was installed in such a way as to be in parallel with the short direction of the specimen sheets, the round bar was lifted at a test speed of 200 mm/min. at 23°C in such a way as to separate the two sheets forming the specimen sheets, and thereby the average value of the peel strength until the two sheets were peeled thoroughly was defined as average peel strength.

[Moldability: Molding Shrinkage Ratio]

The molding shrinkage ratio was determined using, as a measurement sample, a flat plate molded article (sheet) of 130 mm × 130 mm × 2 mm in thickness, made of a resin composition. The flat plate molded article (sheet) was prepared using an injection molding machine, Toshiba 75 Ton manufactured by TOSHIBA MACHINE CO., LTD. Specifically, the preparation was performed by putting pellets of the resin composition into the hopper part of the injection molding machine, melting the resin composition at 240°C, and injection-molding the resultant molten resin composition into a die mold. The injection molding was performed by setting the temperature of the die mold to 15 to 60°C, the injection pressure to 20 to 50 MPa, and the holding pressure to 30 to 40 MPa. The molding shrinkage ratio of the obtained sheet was calculated as a size change in the length of the sheet 3 days after molding with respect to the length of the die mold. Specifically, after the injection molding was performed, the sheet was taken out of the die mold and was left to stand still at room temperature for 3 days, a difference between the length of a side of the sheet and the length of a side of the injection die mold was measured for the four sides, a percentage of the difference with respect to the length of the side was determined for each of the four sides, and an average value of these percentages obtained for the four sides was defined as the molding shrinkage ratio.

[Mechanical Properties: Tensile Modulus and Tensile Elongation]

Tensile modulus (Young's modulus) and tensile elongation of a molded article was measured with a tensile test using a dumbbell molded article specimen in conformity to ASTM D638 Type 4. The dumbbell molded article specimen was prepared by punching the flat plate molded article (sheet) of 130 mm × 130 mm × 2 mm in thickness, obtained by the method described in the "Moldability: Molding Shrinkage Ratio." The tensile test was performed at 23°C at a test speed of 50 mm/min in conformity to ASTM D638 using a tensile tester with five load cells 2005X-5 manufactured by INTESCO Co., Ltd.

<Synthesis Example 1>

<Synthesis of 4-methyl-1-pentene·$\alpha$-olefin copolymer (A-1-1)>

A 1.5 L volume SUS autoclave equipped with a stirring blade and thoroughly purged with nitrogen was filled with 300 ml of n-hexane (dried on activated alumina in a dried nitrogen atmosphere) and 450 ml of 4-methyl-1-pentene at 23°C. This autoclave was filled with 0.75 mL of a 1.0 mmol/ml toluene solution of triisobutylaluminum (TIBAL) and a stirrer was operated.

Next, the autoclave was heated until the internal temperature reached 60°C and pressurized with propylene in such a way that the total pressure (gauge pressure) reached 0.40 MPa.

Subsequently, 0.34 ml of a toluene solution containing 1 mmol of methylaluminoxane in terms of Al and 0.01 mmol of diphenylmethylene(1-ethyl-3-t-butyl-cyclopentadienyl)(2,7-dit-butyl-fluorenyl)zirconium dichloride, which had been prepared in advance, was pressed into the autoclave with nitrogen, to allow polymerization reaction to start. During the polymerization reaction, the temperature was adjusted in such a way that the internal temperature of the autoclave was kept at 60°C.

After a lapse of 60 minutes from the start of the polymerization, 5 ml of methanol was pressed into the autoclave with nitrogen to stop the polymerization reaction, and depressurization was then performed in the autoclave to the atmospheric pressure. After the depressurization, acetone was added to the resultant reaction solution while the reaction solution was being stirred, to give a polymerization reaction product containing a solvent.

Subsequently, the obtained polymerization reaction product containing a solvent was dried under reduced pressure at 100°C for 12 hours, to give 36.9 g of a powdery 4-methyl-1-pentene·$\alpha$-olefin copolymer (A-1-1) (hereinafter, referred to as "copolymer A-1-1"). Results of measuring the physical properties of the obtained copolymer A-1-1 are shown in Table 1. In Table 1, "4MP1" refers to 4-methyl-1-pentene, and "AO" refers to the $\alpha$-olefin.

In the copolymer A-1-1, the content by percentage of 4-methyl-1-pentene was 72.5% by mol, and the content by percentage of propylene was 27.5% by mol. The copolymer A-1-1 had a density of 839 kg/m$^3$. The copolymer A-1-1 had an intrinsic viscosity [$\eta$] of 1.5 dl/g, a weight-average molecular weight (Mw) of 337,000, a molecular weight distribution (Mw/Mn) of 2.1, and a melt flow rate (MFR) of 11 g/10 min. The melting point (Tm) of the copolymer A-1-1 was not observed.

<Synthesis of 4-methyl-1-pentene·$\alpha$-olefin copolymer (A-1-2)>

A 1.5 L volume SUS autoclave equipped with a stirring blade and thoroughly purged with nitrogen was filled with 300 ml of n-hexane (dried on activated alumina in a dried nitrogen atmosphere) and 450 ml of 4-methyl-1-pentene at 23°C, and the autoclave was then filled with 0.75 mL of a 1.0 mmol/ml toluene solution of triisobutylaluminum (TIBAL) and a stirrer was operated.

Next, the autoclave was heated until the internal temperature reached 60°C and pressurized with propylene in such a way that the total pressure (gauge pressure) reached 0.19 MPa.

Subsequently, 0.34 ml of a toluene solution containing 1 mmol of methylaluminoxane in terms of Al and 0.01 mmol of diphenylmethylene(1-ethyl-3-t-butyl-cyclopentadienyl) (2,7-dit-butyl-fluorenyl)zirconium dichloride, which had been prepared in advance, was pressed into the autoclave with nitrogen, to allow polymerization reaction to start. During the polymerization reaction, the temperature was adjusted in such a way that the internal temperature of the autoclave was kept at 60°C.

After a lapse of 60 minutes from the start of the polymerization, 5 ml of methanol was pressed into the autoclave with nitrogen to stop the polymerization reaction, and depressurization was then performed in the autoclave to the atmospheric pressure. After the depressurization, acetone was added to the resultant reaction solution while the reaction solution was being stirred, to give a polymerization reaction product containing a solvent. Subsequently, the obtained polymerization reaction product containing a solvent was dried under reduced pressure at 130°C for 12 hours, to give 44.0 g of a powdery 4-methyl-1-pentene copolymer (A-1-2) (hereinafter, referred to as "copolymer A-1-2"). Results of measuring the physical properties of the obtained copolymer A-1-2 are shown in Table 1.

In the copolymer A-1-2, the content by percentage of 4-methyl-1-pentene was 84.1% by mol, and the content by percentage of propylene was 15.9% by mol. The copolymer A-1-2 had a density of 838 kg/m$^3$. The copolymer A-1-2 had an intrinsic viscosity [$\eta$] of 1.5 dl/g, a weight-average molecular weight (Mw) of 340,000, a molecular weight distribution (Mw/Mn) of 2.1, and a melt flow rate (MFR) of 11 g/10 min. The copolymer A-1-2 had a melting point (Tm) of 132°C.

[Table 1]

Table 1

| | | | Copolymer A-1-1 | Copolymer A-1-2 |
|---|---|---|---|---|
| Composition | Content by percentage of 4MP1 unit | mol% | 72.5 | 84.1 |
| | $\alpha$-Olefin that forms AO unit | | Propylene | Propylene |
| | Content by percentage of AO unit | mol% | 27.5 | 15.9 |
| Intrinsic viscosity [$\eta$] | | dl/g | 1.5 | 1.5 |

(continued)

|  |  | Copolymer A-1-1 | Copolymer A-1-2 |
|---|---|---|---|
| Weight-average molecular weight (Mw) |  | 337000 | 340000 |
| Molecular weight distribution (Mw/Mn) |  | 2.1 | 2.1 |
| Melt flow rate (MFR) | g/10 min | 11 | 11 |
| Density | kg/m$^3$ | 839 | 838 |
| Melting point (T$_m$) | °C | Not observed | 132 |
| tan δ peak: peak temperature | °C | 30 | 43 |
| tan δ peak: peak value | - | 2.78 | 1.46 |

<Example 1>

50 parts by mass of the 4-methyl-1-pentene·α-olefin copolymer (A-1-1) and 50 parts by mass of heavy calcium carbonate ("SNOWLITE sss" manufactured by Maruo Calcium Co., Ltd., average particle diameter of 8.4 μm; hereinafter, referred to as "calcium carbonate (B1-1)") were mixed, and, to a resultant mixture, 0.2 parts by mass of n-octadecyl 3-(4'-hydroxy-3',5'-di-t-butylphenyl)propionate as a heat stabilizer as a secondary antioxidant was added. After that, the mixture was granulated and pelletized under conditions of a set temperature of 230°C, an amount of the resin extruded of 60 g/min, and 200 rpm using a twin-screw extruder BT-30 manufactured by Research Laboratory of Plastics Technology Co., Ltd. (screw diameter of 30 mmφ, L/D = 46). This resin composition was put into a hopper of a 20 mmφ single-screw extruder (single-screw sheet-forming machine, manufactured by Tanaka Iron Works Co., Ltd.) in which a T-die having a lip width of 240 mm was installed. The resin composition was melt-kneaded by setting the cylinder temperature to 230°C and the die temperature to 230°C, and a resultant melt-kneaded product was extruded in such a way as to have a thickness of 500 μm from the T-die to perform cast sheet molding, thereby giving a sheet of Example 1. Results of evaluating the physical properties of the obtained sheet are shown in Table 2-1.

<Example 2>

A resin composition and a sheet of Example 2 were obtained by the same method as in Example 1 except that the amounts of the 4-methyl-1-pentene·α-olefin copolymer (A-1-1) and calcium carbonate (B1-1) added were changed to 40 parts by mass and 60 parts by mass, respectively. Results of evaluating the physical properties of the obtained sheet are shown in Table 2-1.

<Example 3>

A resin composition and a sheet of Example 3 were obtained by the same method as in Example 1 except that the amounts of the 4-methyl-1-pentene·α-olefin copolymer (A-1-1) and calcium carbonate (B1-1) added were changed to 30 parts by mass and 70 parts by mass, respectively. Results of evaluating the physical properties of the obtained sheet are shown in Table 2-1.

<Example 4>

A resin composition and a sheet of Example 4 were obtained by the same method as in Example 2 except that the 4-methyl-1-pentene·α-olefin copolymer (A-1-2) was used instead of the 4-methyl-1-pentene·α-olefin copolymer (A-1-1). Results of evaluating the physical properties of the obtained sheet are shown in Table 2-1.

<Example 5>

50 parts by mass of the 4-methyl-1-pentene·α-olefin copolymer (A-1-1) and 50 parts by mass of heavy calcium carbonate ("CALFINE KS-1000" manufactured by CALFINE Co., Ltd., average particle diameter of 24.2 μm; hereinafter, referred to "calcium carbonate (B1-2)") were mixed, and, to a resultant mixture, 0.2 parts by mass of n-octadecyl 3-(4'-hydroxy-3',5'-di-t-butylphenyl)propionate as a heat stabilizer as a secondary antioxidant was added. After that, the mixture was granulated and pelletized under conditions of a set temperature of 230°C, an amount of the resin extruded of 60 g/min, and 200 rpm using a twin-screw extruder BT-30 manufactured by Research Laboratory of Plastics Technology Co., Ltd. (screw diameter of 30 mmφ, L/D = 46). This resin composition was put into a hopper of a 20 mmφ single-screw extruder (single-screw sheet-forming machine, manufactured by Tanaka Iron Works Co., Ltd.) in which a T-die having a lip width of 240 mm was installed. The resin composition was melt-kneaded by setting the cylinder temperature to 230°C and the die temperature to 230°C, and a resultant melt-kneaded product was extruded in such a way as to have a thickness of 500 μm from the T-die to perform cast sheet molding, thereby giving a sheet of Example 5.

Results of evaluating the physical properties of the obtained sheet and specimen are shown in Table 2-2.

<Example 6>

A resin composition, a sheet, and a specimen of Example 6 were obtained by the same method as in Example 5 except that the amounts of the 4-methyl-1-pentene·α-olefin copolymer (A-1-1) and calcium carbonate (B1-2) added were changed to 40 parts by mass and 60 parts by mass, respectively. Results of evaluating the physical properties of the obtained sheet and specimen are shown in Table 2-2.

<Example 7>

A resin composition, a sheet, and a specimen of Example 7 were obtained by the same method as in Example 5 except that the amounts of the 4-methyl-1-pentene·α-olefin copolymer (A-1-1) and calcium carbonate (B1-2) added were changed to 30 parts by mass and 70 parts by mass, respectively. Results of evaluating the physical properties of the obtained sheet and specimen are shown in Table 2-2.

<Example 8>

A resin composition, a sheet, and a specimen of Example 8 were obtained by the same method as in Example 6 except that the 4-methyl-1-pentene·α-olefin copolymer (A-1-2) was used instead of the 4-methyl-1-pentene·α-olefin copolymer (A-1-1). Results of evaluating the physical properties of the obtained sheet and specimen are shown in Table 2-3.

<Example 9>

A resin composition, a sheet, and a specimen of Example 9 were obtained by the same method as in Example 5 except that the calcium carbonate (B1-2) was changed to barium sulfate (Sakai Chemical Industry Co., Ltd., average particle diameter of 10.0 μm; hereinafter, referred to as "barium sulfate (B2-1)") and that the amounts of the 4-methyl-1-pentene·α-olefin copolymer (A-1-1) and barium sulfate (B2-1) added were changed to 30 parts by mass and 70 parts by mass, respectively. Results of evaluating the physical properties of the obtained sheet and specimen are shown in Table 2-3.

<Example 10>

A resin composition, a sheet, and a specimen of Example 10 were obtained by the same method as in Example 5 except that the amounts of the 4-methyl-1-pentene·α-olefin copolymer (A-1-1) and calcium carbonate (B1-2) added were changed to 36 parts by mass and 54 parts by mass, respectively, and that 10 parts by mass of an olefin elastomer (TAFMER PN2060 manufactured by Mitsui Chemicals, Inc., melting point of 162°C, MFR of 6 g/10 min) was added as an additional resin (C). Results of evaluating the physical properties of the obtained sheet and specimen are shown in Table 2-3.

<Comparative Example 1>

A sheet and a specimen of Comparative Example 1 were obtained by the same method as in Example 1 except that 100 parts by mass of the 4-methyl-1-pentene·α-olefin copolymer (A-1-1) was used and calcium carbonate was not added. Results of evaluating the physical properties of the obtained sheet and specimen are shown in Table 2-4.

<Comparative Example 2>

A sheet and a specimen of Comparative Example 2 were obtained by the same method as in Example 1 except that the amounts of the 4-methyl-1-pentene·α-olefin copolymer (A-1-1) and calcium carbonate (B1-1) added were changed to 90 parts by mass and 10 parts by mass, respectively. Results of evaluating the physical properties of the obtained sheet and specimen are shown in Table 2-4.

<Comparative Example 3>

A sheet and a specimen of Comparative Example 3 were obtained by the same method as in Example 2 except that 60 parts by mass of polypropylene (trade name of Prime Polypro (R) F107 manufactured by Prime Polymer Co., Ltd.) was used as an additional resin (C) instead of calcium carbonate. Results of evaluating the physical properties of the obtained sheet are shown in Table 2-4.

[Table 2-1]

Table 2-1

| | | | | Example 1 | Example 2 | Example 3 | Example 4 |
|---|---|---|---|---|---|---|---|
| Composition of molded article | Thermoplastic resin (A) | Copolymer A-1-1 | Parts by mass | 50 <*50*> (*100*) | 40 <*40*> (*100*) | 30 <*30*> (*100*) | - |
| | | Copolymer A-1-2 | | - | - | - | 40 <*40*> (*100*) |
| | | **Subtotal** | | **50** <*50*> (*100*) | **40** <*40*> (*100*) | **30** <*30*> (*100*) | **40** <*40*> (*100*) |
| | Inorganic substance (B) | Calcium carbonate B1-1 | | 50 <*50*> (*100*) | 60 <*60*> (*150*) | 70 <70> (*233*) | 60 <*60*> (*150*) |
| | | Calcium carbonate B1-2 | | - | - | - | - |
| | | Barium sulfate B2-1 | | | | | |
| | Subtotal | | | **100** <***100***> (*200*) | **100** <***100***> (*250*) | **100** <***100***> (*333*) | **100** <***100***> (*250*) |
| | Additional resin (C) | PP | | - | - | - | - |
| | | Olefin elastomer | | - | - | - | - |
| | **Total** | | | **100** <***100***> (*200*) | **100** <***100***> (*250*) | **100** <***100***> (*333*) | **100** <***100***> (*250*) |
| Lightness | Density | | g/cm$^3$ | 1.22 | 1.43 | 1.67 | 1.44 |
| Stress-absorbing ability | tan δ peak | Peak temperature | °C | 30 | 30 | 30 | 42 |
| | | Peak value | - | 2.36 | 2.20 | 1.94 | 1.10 |
| Tackiness | Average peel strength | | N/cm | 0.4 | 0.1 | 1.2 | 0.1 |
| Moldability | Molding shrinkage ratio | | % | 4.4 | 3.6 | 2.2 | 2.8 |
| Mechanical properties | Tensile modulus | | MPa | 454 | 837 | 1193 | 1420 |
| | Tensile elongation | | % | 254 | 252 | 230 | 196 |
| (Note: Each of the values of parts by mass represented in italic with round brackets is a value assuming that the total amount of the thermoplastic resin (A) (amount described in "Subtotal") is 100 parts by mass; and each of the values of parts by mass represented in italic with angle brackets is a value assuming that the total amount of the thermoplastic resin (A) and the inorganic substance (B) (amount described in second "Subtotal") is 100 parts by mass.) | | | | | | | |

[Table 2-2]

Table 2-2

|  |  |  |  | Example 5 | Example 6 | Example 7 |
|---|---|---|---|---|---|---|
| Composition of molded article | Thermoplastic resin (A) | Copolymer A-1-1 | Parts by mass | 50 *<50>* *(100)* | 40 *<40>* *(100)* | 30 *<30>* *(100)* |
|  |  | Copolymer A-1-2 |  | - | - | - |
|  |  | **Subtotal** |  | **50** *<50>* *(100)* | **40** *<40>* *(100)* | **30** *<30>* *(100)* |
|  | Inorganic substance (B) | Calcium carbonate B1-1 |  | - | - | - |
|  |  | Calcium carbonate B1-2 |  | 50 *<50>* *(100)* | 60 *<60>* *(150)* | 70 <70> *(233)* |
|  |  | Barium sulfate B2-1 |  | - | - | - |
|  | **Subtotal** |  |  | **100 *<100>*** *(200)* | **100 *<100>*** *(250)* | **100 *<100>*** *(333)* |
|  | Additional resin (C) | PP |  | - | - | - |
|  |  | Olefin elastomer |  | - | - | - |
|  | **Total** |  |  | **100 *<100>*** *(200)* | **100 *<100>*** *(250)* | **100 *<100>*** *(333)* |
| Lightness | Density |  | g/cm$^3$ | 1.22 | 1.45 | 1.60 |
| Stress-absorbing ability | tan δ peak | Peak temperature | °C | 30 | 31 | 32 |
|  |  | Peak value | - | 2.36 | 2.27 | 2.04 |
| Tackiness | Average peel strength |  | N/cm | 0.4 | 0.1 | 1.2 |
| Moldability | Molding shrinkage ratio |  | % | 4.4 | 3.6 | 2.2 |
| Mechanical properties | Tensile modulus |  | MPa | 653 | 857 | 1203 |
|  | Tensile elongation |  | % | 270 | 249 | 231 |

(Note: Each of the values of parts by mass represented in italic with round brackets is a value assuming that the total amount of the thermoplastic resin (A) (amount described in "Subtotal") is 100 parts by mass; and each of the values of parts by mass represented in italic with angle brackets is a value assuming that the total amount of the thermoplastic resin (A) and the inorganic substance (B) (amount described in second "Subtotal") is 100 parts by mass.)

[Table 2-3]

Table 2-3

| | | | | Example 8 | Example 9 | Example 10 |
|---|---|---|---|---|---|---|
| Composition of molded article | Thermoplastic resin (A) | Copolymer A-1-1 | Parts by mass | - | 30 <30> (100) | 36 <40> (100) |
| | | Copolymer A-1-2 | | 40 <40> (100) | - | - |
| | | **Subtotal** | | **40 <40> (100)** | **30 <30> (100)** | **36 <40> (100)** |
| | Inorganic substance (B) | Calcium carbonate B1-1 | | | | |
| | | Calcium carbonate B1-2 | | 60 <60> (150) | - | 54 <60> (150) |
| | | Barium sulfate B2-1 | | - | 70 <70> (233) | - |
| | **Subtotal** | | | **100 <100> (250)** | **100 <100> (333)** | **90 <100> (250)** |
| | Additional resin (C) | PP | | - | - | - |
| | | Olefin elastomer | | - | - | 10 <11> (28) |
| | **Total** | | | **100 <100> (250)** | **100 <100> (333)** | **100 <111> (278)** |
| Lightness | Density | | g/cm$^3$ | 1.44 | 1.70 | 1.39 |
| Stress-absorbing ability | tan $\delta$ peak | Peak temperature | °C | 42 | 31 | 29 |
| | | Peak value | - | 1.10 | 2.22 | 1.35 |
| Tackiness | Average peel strength | | N/cm | 0.1 | 1.1 | 1.3 |
| Moldability | Molding shrinkage ratio | | % | 2.8 | 2.6 | 4.1 |
| Mechanical properti es | Tensile modulus | | MPa | 1420 | 668 | 165 |
| | Tensile elongation | | % | 196 | 201 | 320 |

(Note: Each of the values of parts by mass represented in italic with round brackets is a value assuming that the total amount of the thermoplastic resin (A) (amount described in "Subtotal") is 100 parts by mass; and each of the values of parts by mass represented in italic with angle brackets is a value assuming that the total amount of the thermoplastic resin (A) and the inorganic substance (B) (amount described in second "Subtotal") is 100 parts by mass.)

[Table 2-4]

Table 2-4

| | | | | Comparative Example 1 | Comparative Example 2 | Comparative Example 3 |
|---|---|---|---|---|---|---|
| Composition of molded article | Thermoplastic resin (A) | Copolymer A-1-1 | Parts by mass | 100 *<100> (100)* | 90 *<90> (100)* | 40 *<100> (100)* |
| | | Copolymer A-1-2 | | | | |
| | | **Subtotal** | | **100** *<100> (100)* | **90** *<90> (100)* | **40** *<100>* **(100)** |
| | Inorganic substance (B) | Calcium carbonate B1-1 | | - | 10 <10> *(11)* | - |
| | | Calcium carbonate B1-2 | | - | - | - |
| | | Barium sulfate B2-1 | | | | |
| | **Subtotal** | | | **100 <100>** *(100)* | **100 <100>** *(111)* | **40 <100>** *(100)* |
| | Additional resin (C) | PP | | - | - | 60 *<150> (150)* |
| | | Olefin elastomer | | - | - | - |
| | **Total** | | | **100** *<100> (100)* | **100** *<100> (111)* | **100** *<250> (250)* |
| Lightness | Density | | g/cm$^3$ | 0.84 | 0.91 | 0.88 |
| Stress-absorbing ability | tan $\delta$ peak | Peak temperature | °C | 30 | 30 | 23 |
| | | Peak value | - | 2.80 | 2.70 | 0.25 |
| Tackiness | Average peel strength | | N/cm | 27.5 | 19.0 | 0.5 |
| Moldability | Molding shrinkage ratio | | % | 14.0 | 13.1 | 3.3 |
| Mechanical properti es | Tensile modulus | | MPa | 184 | 249 | 987 |
| | Tensile elongation | | % | 394 | 321 | 232 |

(Note: Each of the values of parts by mass represented in italic with round brackets is a value assuming that the total amount of the thermoplastic resin (A) (amount described in "Subtotal") is 100 parts by mass; and each of the values of parts by mass represented in italic with angle brackets is a value assuming that the total amount of the thermoplastic resin (A) and the inorganic substance (B) (amount described in second "Subtotal") is 100 parts by mass.)

## Claims

1. A resin composition (X) comprising:

   10 to 50 parts by mass of a 4-methyl-1-pentene·$\alpha$-olefin copolymer (A-1); and
   50 to 90 parts by mass of an inorganic substance (B) (assuming that the total amount of the 4-methyl-1-pentene·$\alpha$-olefin copolymer (A-1) and the inorganic substance (B) is 100 parts by mass), and satisfying the following requirements (a) and (b):

   a requirement (a); having a tan $\delta$ peak temperature of 0°C or higher and 60°C or lower, the tan $\delta$ peak

temperature being obtained by performing dynamic viscoelastic measurement at a frequency of 10 rad/s (1.6 Hz) in the temperature range of -40 to 150°C, and

a requirement (b); having a tan δ peak value of 0.8 or more and 5.0 or less, the tan δ peak value being obtained by performing dynamic viscoelastic measurement at a frequency of 10 rad/s (1.6 Hz) in the temperature range of -40 to 150°C.

2. A resin composition (X) comprising:

10 to 50 parts by mass of a thermoplastic resin (A); and
50 to 90 parts by mass of an inorganic substance (B) (assuming that the total amount of the thermoplastic resin (A) and the inorganic substance (B) is 100 parts by mass), and satisfying the following requirements (a) and (b):

a requirement (a); having a tan δ peak temperature of 0°C or higher and 60°C or lower, the tan δ peak temperature being obtained by performing dynamic viscoelastic measurement at a frequency of 10 rad/s (1.6 Hz) in the temperature range of -40 to 150°C; and
a requirement (b); having a tan δ peak value of 0.8 or more and 5.0 or less, the tan δ peak value being obtained by performing dynamic viscoelastic measurement at a frequency of 10 rad/s (1.6 Hz) in the temperature range of -40 to 150°C.

3. The resin composition (X) according to claim 1, wherein the 4-methyl-1-pentene·α-olefin copolymer (A-1) satisfies the following requirements (c) to (f):

a requirement (c); the copolymer (A-1) comprises 55 to 90% by mol of a constitutional unit (i) derived from 4-methyl-1-pentene and 10 to 45% by mol of a constitutional unit (ii) derived from the α-olefin (excluding 4-methyl-1-pentene) assuming that the total amount of the constitutional unit (i) and the constitutional unit (ii) is 100% by mol;
a requirement (d); the copolymer (A-1) has a melting point (Tm) as measured by a differential scanning calorimeter (DSC) of 160°C or lower, or has no observed melting point (Tm) ;
a requirement (e); the copolymer (A-1) has a tan δ peak temperature of 15°C or higher and 45°C or lower, the tan δ peak temperature being obtained by performing dynamic viscoelastic measurement at a frequency of 10 rad/s (1.6 Hz) in the temperature range of -40 to 150°C; and
a requirement (f); the copolymer (A-1) has a tan δ peak value of 0.6 or more and 5.0 or less, the tan δ peak value being obtained by performing dynamic viscoelastic measurement at a frequency of 10 rad/s (1.6 Hz) in the temperature range of -40 to 150°C.

4. The resin composition (X) according to any one of claims 1 to 3, wherein the inorganic substance (B) is one or more selected from the group consisting of magnesium sulfate, barium sulfate, calcium carbonate, magnesium oxide, and talc.

5. The resin composition (X) according to any one of claims 1 to 4, wherein the inorganic substance (B) has an average particle diameter of 0.01 μm to 100 μm.

6. A molded article comprising the resin composition according to any one of claims 1 to 5.

7. A sheet comprising the resin composition according to any one of claims 1 to 5.

8. A toy comprising the resin composition according to any one of claims 1 to 5.

9. A daily good comprising the resin composition according to any one of claims 1 to 5.

10. An electronic equipment housing comprising the resin composition according to any one of claims 1 to 5.

## INTERNATIONAL SEARCH REPORT

International application No.

PCT/JP2020/041711

### A. CLASSIFICATION OF SUBJECT MATTER

C08F 210/14(2006.01)i; C08L 23/20(2006.01)i; C08K 3/26(2006.01)i
FI: C08L23/20; C08K3/26; C08F210/14

According to International Patent Classification (IPC) or to both national classification and IPC

### B. FIELDS SEARCHED

Minimum documentation searched (classification system followed by classification symbols)
C08F210/14; C08L1/00-101/14; C08K3/00-13/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/143599 A1 (MITSUI CHEMICALS, INC.) 15 September 2016 (2016-09-15) claims 2-3, 5-6, paragraphs [0012], [0091]-[0092], examples, tables 1-2 | 1-10 |
| A | JP 2018-135415 A (MCPP INNOVATION LLC) 30 August 2018 (2018-08-30) claim 1, paragraphs [0007], [0062]-[0064], [0085]-[0087], [0140], examples | 1-10 |
| A | JP 2015-023099 A (DAINIPPON PRINTING CO., LTD.) 02 February 2015 (2015-02-02) claims 1, 3, paragraphs [0007], [0024], examples, table 1 | 1-10 |
| A | JP 2016-132692 A (MITSUI CHEMICALS, INC.) 25 July 2016 (2016-07-25) claims 1-2, 4, paragraphs [0007], [0044]-[0045], examples | 1-10 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 January 2021 (06.01.2021) | 19 January 2021 (19.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

Information on patent family members

| International application No. |
|---|
| PCT/JP2020/041711 |

| Patent Documents referred in the Report | Publication Date | Patent Family | Publication Date |
|---|---|---|---|
| WO 2016/143599 A1 | 15 Sep. 2016 | US 2019/0211193 A1 paragraphs [0015], [0172]-[0178], examples, tables 1-2 EP 3266822 A1 CN 107250247 A KR 10-2017-0117500 A TW 201641564 A | |
| JP 2018-135415 A | 30 Aug. 2018 | (Family: none) | |
| JP 2015-023099 A | 02 Feb. 2015 | (Family: none) | |
| JP 2016-132692 A | 25 Jul. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012082388 A
- JP 2017132920 A
- WO 2017209215 A
- JP 2001071378 A
- WO 2018092494 A
- WO 0153369 A
- WO 0127124 A
- JP H03193796 A
- JP H0241303 A
- WO 2011055803 A
- WO 2014050817 A